(19) Europäisches Patentamt
European Patent Office
Office européen des brevets

(11) **EP 3 616 964 B1**

(12) **EUROPEAN PATENT SPECIFICATION**

(45) Date of publication and mention
of the grant of the patent:
**03.03.2021 Bulletin 2021/09**

(51) Int Cl.:
*B60K 28/06* (2006.01)   *B60W 10/04* (2006.01)
*B60W 10/184* (2012.01)   *B60W 10/20* (2006.01)
*B60W 10/06* (2006.01)   *B60W 30/095* (2012.01)

(21) Application number: **19193088.2**

(22) Date of filing: **22.08.2019**

(54) **VEHICLE STOP SUPPORT SYSTEM**

**FAHRZEUGSTOPPUNTERSTÜTZUNGSSYSTEM**

**SYSTÈME DE SUPPORT DE BUTÉE DE VÉHICULE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.08.2018 JP 2018159065**

(43) Date of publication of application:
**04.03.2020 Bulletin 2020/10**

(73) Proprietor: **Mazda Motor Corporation Aki-gun, Hiroshima 730-8670 (JP)**

(72) Inventors:
• **SUGANO, Takashi**
  **Hiroshima 730-8670 (JP)**
• **YAMASHITA, Takuya**
  **Hiroshima 730-8670 (JP)**
• **FUSHIMA, Takesato**
  **Hiroshima 730-8670 (JP)**

(74) Representative: **Herrmann, Uwe Lorenz Seidler Gossel Rechtsanwälte Patentanwälte Partnerschaft mbB Widenmayerstraße 23 80538 München (DE)**

(56) References cited:
**DE-A1-102013 016 436    DE-A1-102016 224 157 US-A1- 2018 120 837**

**Description**

TECHNICAL FIELD

The present invention relates to a vehicle stop support system for supporting stop of a vehicle which is traveling.

BACKGROUND ART

There has been known a system for causing a vehicle to stop on behalf of a driver, in the event that the driver becomes unable to continue safe driving due to a sudden change in his/her body condition or the like (such a driver will hereinafter be referred to also as "driver in an emergency condition"). For example, in the following Patent Document 1, there is disclosed a system for causing a vehicle to stop in an evacuation space, upon detection of a physical abnormality of a driver. Further, as an improvement to such a system, in the Patent Document 2, there is disclosed prohibiting a vehicle from stopping in an area having poor visibility. This vehicle stop support system makes it possible to keep a driver in an emergency condition, a fellow passenger and other road user away from danger of a vehicle collision, and rescue the driver after stop of the vehicle.

DE 10 2013 016 436 A1 discloses a vehicle stop support system with the features disclosed in the preamble of claim 1.

CITATION LIST

[Patent Document]

Patent Document 1: JP 2017-001519A
Patent Document 2: JP 2017-190048A

SUMMARY OF INVENTION

[Technical Problem]

In recent years, along with development of technologies for automated vehicle driving, technologies concerning components such as a high-accuracy geographic map and a vehicle-mounted camera have been making great progress. In the field of vehicle stop support systems, it is expected to effectively utilize information provided from these components to support vehicle stop so as to further contribute to rescue of a driver in an emergency condition.

The present invention has been made to fulfill this demand, and an object of the present invention to provide a vehicle stop support system capable of supporting vehicle stop so as to further contribute to rescue of a driver in an emergency condition.

[Solution to Technical Problem]

In order to achieve the above object, the present invention provides a vehicle stop support system for supporting stop of a vehicle which is traveling. The vehicle stop support system comprises: an abnormality detection part for detecting a physical abnormality of a driver; a target time period setting part for setting a target time period based on the abnormality detected by the abnormality detection part; a candidate detection part for detecting a plurality of stop point candidates which exist in a traveling direction of the vehicle; a required time period estimation part for estimating a time period required to reach each of the stop point candidates; a stop point setting part for setting a stop point; and a vehicle control part for controlling the vehicle to travel to the stop point and stop at the stop point, wherein the stop point setting part is operable to set the stop point from one or more of the plurality of stop point candidates each satisfying a condition that the required time estimated with respect thereto is equal to or less than the target time period.

In the vehicle stop support system of the present invention having the above feature, the target time period is set based on the physical abnormality of the driver detected by the abnormality detection part. Thus, for example, by setting a relatively short target time period with respect to a physical abnormality having a relatively high urgency, it becomes possible to quickly stop the vehicle to start a rescue operation. On the other hand, by setting a relatively long target time period with respect to a physical abnormality having a relatively low urgency, it becomes possible to set the stop point from among a larger number of stop point candidates.

Preferably, the vehicle stop support system of the present invention further comprises a storage part preliminarily storing therein a plurality of values of the target time period each corresponding to a respective one of a plurality of physical abnormalities, wherein the target time period setting part is operable to read, from the storage part, one of the stored values of the target time period which corresponds to the abnormality detected by the abnormality detection part.

According to this feature, it is possible to suppress a situation where, due to disturbance or the like, the target time period setting part undesirably operates to set the target time period to an inappropriately-short or-long value. This makes it possible to set, as the target time period, a sufficient time period required for the physical abnormality of the driver.

Preferably, in the vehicle stop support system of the present invention, the vehicle control part is operable, when the abnormality detection part detects the abnormality, to control the vehicle to travel at a vehicle speed which is lower than a predetermined value,

According to this feature, it is possible to suppress an inertia force acting on the driver during stop of the vehicle. This makes it possible to allow the driver in an emergency condition to wait for rescue without a large postural imbalance.

[Effect of Invention]

The present invention can provide a vehicle stop support system capable of supporting vehicle stop so as to further contribute to rescue of a driver in an emergency condition.

BRIEF DESCRIPTION OF DRAWINGS

FIG. 1 is a block diagram showing a vehicle stop support system according to one embodiment of the present invention.
FIG. 2 is an explanatory diagram of a first pattern.
FIG. 3 is an explanatory diagram of a second pattern.
FIG. 4 is an explanatory diagram of a third pattern.
FIG. 5 is a flowchart showing a processing routine to be executed by an ECU.
FIG. 6 is a table showing a correspondence relationship between a disorder/disease and a target time period.
FIG. 7 is a graph for explaining a visibility risk.
FIG. 8 is a graph for explaining a relative speed risk.

DESCRIPTION OF EMBODIMENTS

With reference to accompanying drawings, one embodiment of the present invention will now be described. For the sake of facilitating understanding of the description, the same reference sign is assigned to the same elements or components in the figures, and duplicated description of such a component will be omitted.

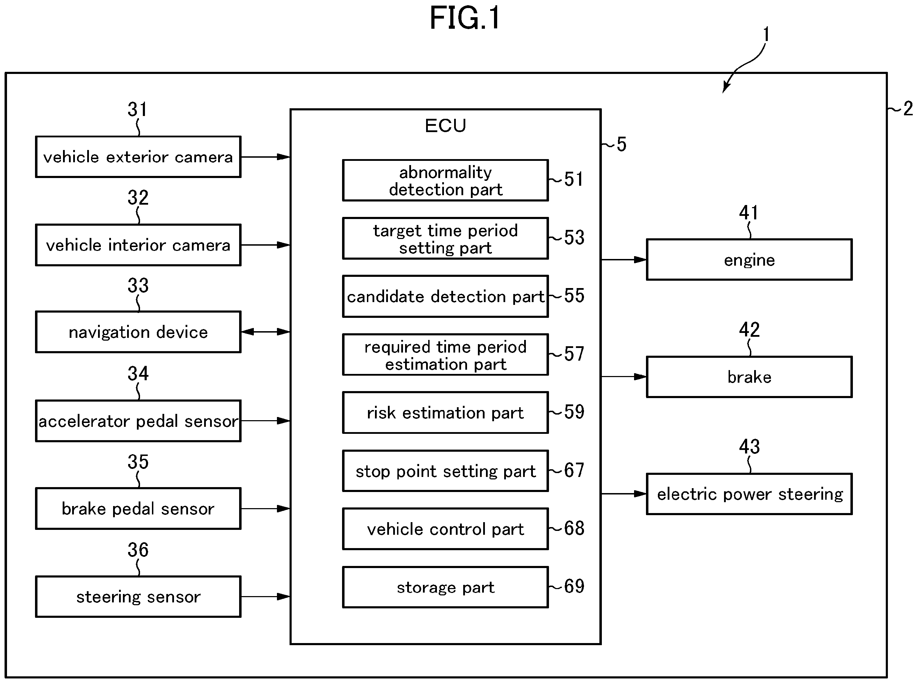

First of all, with reference to FIG. 1, the configuration of a vehicle stop system 1 (hereinafter referred to as "system 1") according to this embodiment will be described. FIG. 1 is a block diagram showing the system 1. The system 1 is equipped in a vehicle, and operable to support stop of the vehicle which is traveling, as an emergency measure. In this Description, a vehicle equipped with the system 1 will be referred to as "vehicle 2".

Further, in this Description, a forward movement direction of the vehicle 2 will be referred to as "front" or "forward", and a backward movement direction of the vehicle 2 will be referred to as "back" or "backward". Further, a left side with respect to the vehicle 2 oriented in the forward movement direction will be referred to as "left" or "leftward".

The system 1 comprises a vehicle exterior camera 31, a vehicle interior camera 32, a navigation device 33, an accelerator pedal sensor 34, a brake pedal sensor 35, a steering sensor 36, and an ECU (Electronic Control Unit) 5.

The vehicle exterior camera 31 is operable to take an image of the outside of the vehicle 2, particularly, the front of the vehicle 2, to acquire image data thereabout. The vehicle exterior camera 31 is composed of, e.g., an image sensor, and installed to a non-illustrated rearview mirror of the vehicle 2. The vehicle exterior camera 31 is also operable to transmit a signal corresponding to the acquired image data, to the ECU 5.

The vehicle interior camera 32 is operable to take an image of the inside of the vehicle 2 to acquire image data thereabout. Specifically, the vehicle interior camera 32 is operable to take an image of a range including the upper body of a driver in a passenger compartment of the vehicle 2. The vehicle interior camera 32 is composed of, e.g., an image sensor, and installed to a non-illustrated instrument panel of the vehicle 2. The vehicle interior camera 32 is also operable to transmit a signal corresponding to the acquired image data, to the ECU 5.

The navigation device 33 is capable of providing various information to a passenger of the vehicle 2. The navigation device 33 stores therein map information, or is capable of acquiring map information through communication with a server outside the vehicle 2. The map information contains a road configuration, an upper speed limit assigned to each road in accordance with law or regulation, and a traffic state of each road. The map information also contains information regarding points where ambulances are deployed, such as a fire department and a medical center. The navigation device 33 comprises a sensor for detecting the location of the vehicle 2, such as a GPS (Global Positioning System) senor or a self-contained navigation sensor. The navigation device 33 is operable to provide, to the passenger, map information, and information regarding the position of the vehicle 2 on the map, a time period required for the vehicle 2 to reach a given point, and others, with sound or display. The navigation device 33 is configured to be communicable with the ECU 5, and operable, in response to a request from the ECU 5, to transmit a signal to the ECU 5, thereby providing a variety of information thereto.

The accelerator pedal sensor 34 is a sensor for detecting a depression amount of a non-illustrated accelerator pedal of the vehicle 2. The accelerator pedal sensor 34 is operable to transmit, to the ECU 5, a signal corresponding to the detected depression amount.

The brake pedal sensor 35 is a sensor for detecting a depression amount of a non-illustrated brake pedal of the vehicle 2. The brake pedal sensor 35 is operable to transmit, to the ECU 5, a signal corresponding to the detected depression amount.

The steering sensor 36 is a sensor for detecting a steering direction and a steering angle of a non-illustrated steering wheel of the vehicle 2. For example, the steering sensor 36 is provided with an encoder, and operable to count the number of slits in a plate rotatable together with the steering wheel. The steering sensor 36 is operable to transmit, to the ECU 5, a signal corresponding to the detected steering direction and steering angle.

The ECU 5 is a control device for controlling components through signal transmission and receiving with respect thereto. The ECU 5 is partly or entirely constructed as an analog circuit or as a digital processor. ECU 5 comprises an abnormality detection part 51, a target time period setting part 53, a candidate detection part 55, a required time period estimation part 57, a risk estimation part 59, a stop point setting part 67, a vehicle control part 68, and a storage part 69.

In FIG. 1, each function of the ECU 5 is shown as a block. However, it should be understood that a software modules incorporated in the analog circuit or digital processor of the ECU 5 needs not necessarily be divided as shown in FIG. 1. That is, each of the function block shown in FIG. 1 may be further segmentalized, or two or more of the function blocks may be integrated into a single function block which has functions of the two or more function blocks. It is apparent to a person of ordinary skill in the art that the internal configuration of the ECU 5 may be appropriately modified as long as the ECU 5 is configured to be capable of executing the after-mentioned processing routine.

The abnormality detection part 51 is configured to detect a physical abnormality of the driver of the vehicle 2. The abnormality detection part 51 is operable to detect the physical abnormality of the driver, based on signals received by the ECU 5 from the vehicle interior camera 32, the accelerator pedal sensor 34, the brake pedal sensor 35 and the steering sensor 36.

For example, the abnormality detection part 51 is operable to subject the image data acquired by the vehicle interior camera 32 to given processing to identify the upper body, head region, face, eyes, etc., of the driver and acquire information regarding the identified regions. Further, the abnormality detection part 51 is operable to detect information regarding driving manipulations of the driver, based on the signals received from the accelerator pedal sensor 34, the brake pedal sensor 35 and the steering sensor 36. Then, the abnormality detection part 51 is operable to perform a given calculation based on the acquired information to detect the state of consciousness of the driver, an open/closed state of the eyes of the driver, a line-of-sight direction of the driver, the position of the center of gravity of the driver, etc.

Further, the abnormality detection part 51 is operable to determine whether or not the line-of-sight direction of the driver is coincident with a traveling direction of the vehicle 2. Specifically, the abnormality detection part 51 is operable to determine whether or not the line-of-sight direction of the driver falls within a given range including the traveling direction of the vehicle 2. Additionally, the abnormality detection part 51 is operable to determine whether or not the center-of-gravity position of the driver is adequate, based on a distance from a seating surface of a seat on which the driver sits to the center of gravity of the driver.

Then, the abnormality detection part 51 is operable to perform a given calculation based on the above acquired information, to estimate a disorder/disease developing in the body of the driver. Examples of the disorder/disease include cerebrovascular diseases, heart diseases, gastrointestinal diseases, and syncope, which are difficult for the driver himself/herself to predict sudden development thereof.

The target time period setting part 53 is operable to set a target time period, based on the abnormality detected by the abnormality detection part 51. As will be described later, the target time period setting part 53 is operable to set, as the target time period, a time period corresponding to a disorder/disease developing in the body of the driver.

The candidate detection part 55 is configured to detect a stop point candidate. Here, a point at which the system 1 causes the vehicle 2 to stop will be referred to as "stop point", and a point which has a potential to become the stop point will be referred to as "stop point candidate". The candidate detection part 55 is operable to acquire map information based on a signal received from the navigation device 33, and detect a plurality of stop point candidates each of which exists in the traveling direction of the vehicle 2 in the acquired map information, and satisfies a given condition.

The required time period estimation part 57 is configured to estimate a time period required to reach each of the stop point candidates detected by the candidate detection part 55. Specifically, the required time period estimation part 57 is operable to search a course to each of the stop point candidates and determine a vehicle speed pattern of the vehicle 2 when the vehicle 2 travels along the course, and to estimate a time period required for the vehicle 2 to reach each of the stop point candidates, based on a corresponding set of the course and the vehicle speed pattern.

The risk estimation part 59 is configured to estimate a rear-end collision risk at each of the stop point candidates detected by the candidate detection part 55. Here, the "rear-end collision risk" means an index regarding a risk that, when assuming that the vehicle 2 stops at each of the stop point candidates, the vehicle 2 will be rear-ended by a following vehicle. The degree of the rear-end collision risk varies depending on a point. The details of estimation of the rear-end collision risk will be described later.

The stop point setting part 67 is configured to narrow down the plurality of stop point candidates detected by the candidate detection part 55, based on a given condition, or set one of the stop point candidates, as the stop point. The details of setting of the stop point will be described later.

The vehicle control part 68 is configured to control the behavior of the vehicle 2. Specifically, the vehicle control part 68 is operable to transmit control signals, respectively, to an engine 41 and a brake 42 of the vehicle 2, so as to control the vehicle speed of the vehicle 2. Further, the vehicle control part 68 is operable to subject the image data acquired by the vehicle exterior camera 31, to given processing, to detect a demarcation line of a road on which the vehicle 2 is traveling. Then, the vehicle control part 68 is operable to transmit, to an electric power steering 43, a control signal created based on the detected demarcation line, to control the traveling direction of the vehicle 2.

The storage part 69 is composed of, e.g., a non-volatile memory, and stores therein a variety of information. The information stored in the storage part 69 is read by the abnormality detection part 51 and others, and used for various calculations.

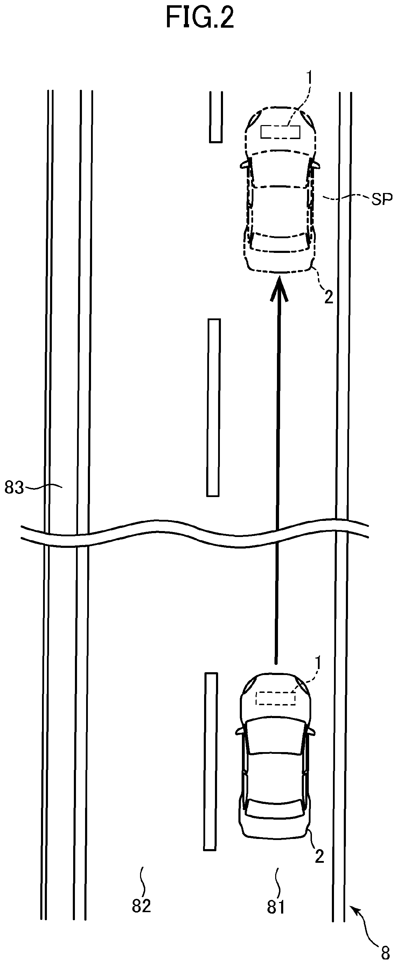

Next, with reference to FIGS. 2 to 4, control of the vehicle 2 by the system 1 will be described. FIGS. 2 to 4 show an environment where it is stipulated that any vehicle shall travel in the left lane, by law or regulation, like the Japanese traffic environment. A road 8 in FIGS. 2 to 4 is a four-lane road, wherein two lanes on one side consists of an overtaking lane 81 and a cruising lane 82. The system 1 is operable, upon satisfaction of a given condition during traveling of the vehicle 2, to control the vehicle 2 to stop at a stop point SP on behalf of the driver, as an emergency measure. The stop point SP is set in one of the following three patterns.

[First Pattern]

FIG. 2 shows a first pattern in which the stop point setting part 67 (see FIG. 1) of the system 1 operates to set a point within the road 8, as the stop point SP. Specifically, FIG. 2 shows a situation where a given condition is satisfied when the vehicle 2 is traveling in the overtaking lane 81, and a point located on the overtaking lane 81 in the traveling direction of the vehicle 2 is set as the stop point SP. In this situation, the vehicle control part 68 (see FIG. 1) of the system 1 operates to transmit a control signal to the electric power steering 43 (see FIG. 1) so as to controllably cause the vehicle 2 to keep traveling in the overtaking lane 81.

[Second Pattern]

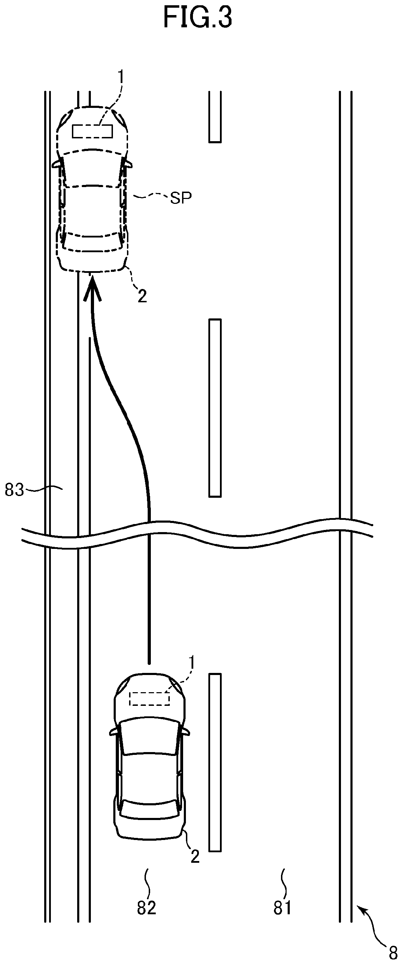

FIG. 3 shows a second pattern in which the stop point setting part 67 of the system 1 operates to set a road shoulder 83 of the road 8, as the stop point SP. Specifically, FIG. 3 shows a situation where a given condition is satisfied when the vehicle 2 is traveling in the cruising lane 82, and a road shoulder 83 existing in the traveling direction of the vehicle 2 is set as the stop point SP. In this situation, the vehicle control part 68 of the system 1 operates to transmit a control signal to the electric power steering 43 so as to controllably cause the vehicle 2 to keep traveling in the cruising lane 82 and move forwardly and obliquely leftwardly in the vicinity of the stop point SP.

[Third Pattern]

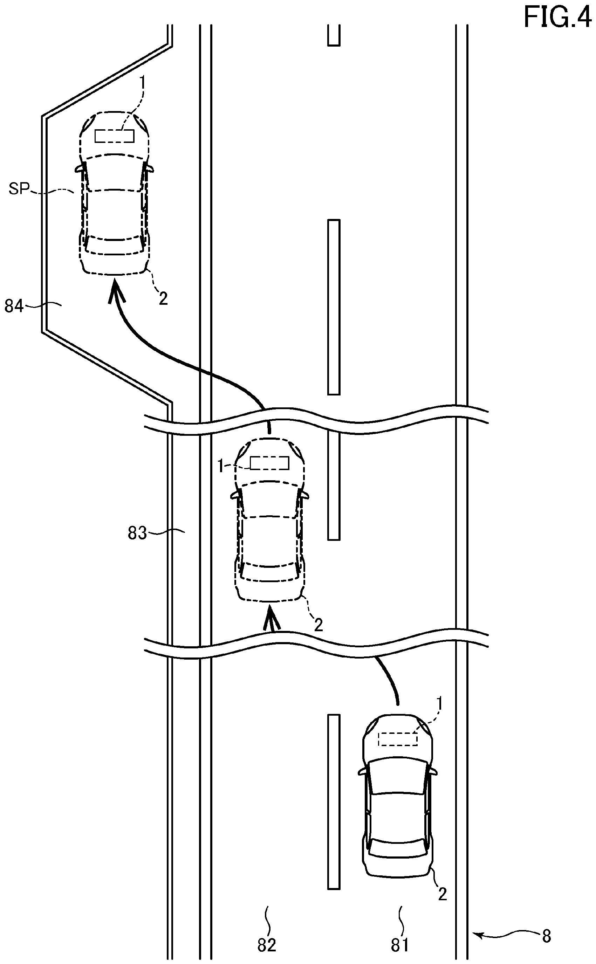

FIG. 4 shows a third pattern in which the stop point setting part 67 of the system 1 operates to set an emergency parking bay 84 provided on the lateral side of the road 8, as the stop point SP. Specifically, FIG. 4 shows a situation where a given condition is satisfied when the vehicle 2 is traveling in the overtaking lane 81, and an emergency parking bay 84 existing in the traveling direction of the vehicle 2 is set as the stop point SP. In this situation, the vehicle control part 68 of the system 1 operates to transmit a control signal to the electric power steering 43 so as to controllably cause the vehicle 2 to first move from the overtaking lane 81 to the cruising lane 82 and to keep traveling in the cruising lane 82 and move forwardly and obliquely leftwardly in the vicinity of the stop point SP.

In any of the first to third patterns, the vehicle control part 68 operates to, until the vehicle 2 reaches the vicinity of the stop point SP, transmit a control signal to the engine 41 and the brake 42 so as to control the vehicle speed of the vehicle 2 such that it becomes lower than 50 lm/h. Then, the vehicle control part 68 operates to controllably cause the vehicle 2 to stop at the stop point SP. After stop of the vehicle 2, the system 1 operates to blink a blinker and/or sound an alarm to prevent the vehicle 2 from being rear-ended by a following vehicle, and inform the outside of a fact that the driver of the vehicle 2 is in need of rescue.

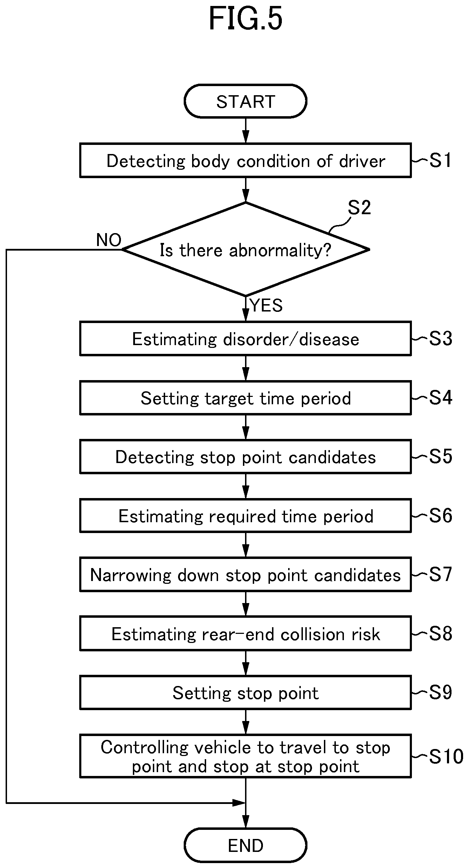

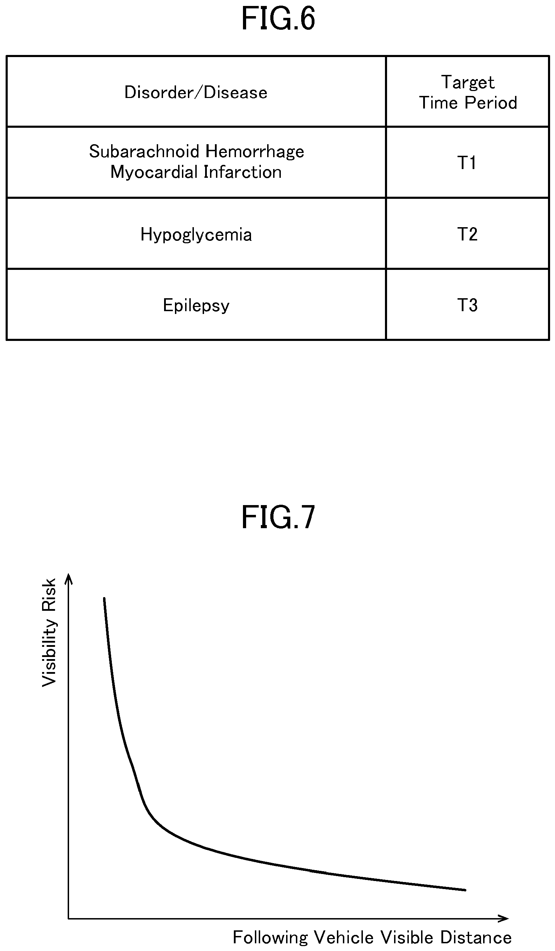

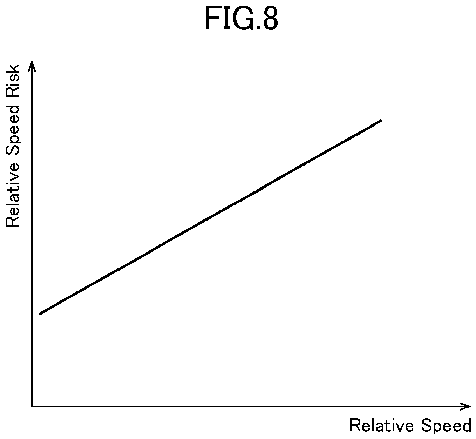

Next, with reference to FIGS. 5 to 8, a processing routine to be executed by the ECU 5 (see FIG. 1) will be described. FIG. 5 is a flowchart showing the processing routine to be executed by the ECU 5. During traveling of the vehicle 2, this professing routine will be repeatedly executed with a given period. FIG. 6 is a table showing a correspondence relationship between a disorder/disease and the target time period. FIG. 7 is a graph for explaining a visibility risk. FIG. 8 is a graph for explaining a relative speed risk. It should be noted that processing to be executed by each of the function blocks of the ECU 5 is also described as being executed by the ECU 5, in the lump, for the sake of simplicity of description.

First of all, in step S1 shown in FIG. 5, the ECU 5 operates to detect the body condition of the driver of the vehicle 2. Specifically, the ECU 5 operates to detect, based on the image data acquired by the vehicle interior camera 32 (see FIG. 1), the state of consciousness of the driver, the open/closed state of the eyes of the driver, the line-of-sight direction of the driver, the center-of-gravity position of the driver, etc.

In step S2, the ECU 5 operates to determine whether or not the driver has a physical abnormality. Specifically, the ECU 5 operates to determine, based on a result of the detection in the step S1, whether or not the driver has a physical abnormality which causes the driver to become unable to drive the vehicle 2 safely. For example, the ECU 5 may be configured to quantify the degree of consciousness of the driver, and, when the resulting quantified value is less than a given threshold, determine that the driver has a physical abnormality. When the driver is determined not to have any physical abnormality (S2: NO), the ECU 5 operates to terminate the vehicle stop support processing routine. On the other hand, when the driver is determined to have a physical abnormality (S2: YES), the ECU 5 proceeds to step S3.

In the step S3, the ECU 5 operates to estimate a disorder/disease of the driver. Specifically, the ECU 5 operates to estimate, based on the result of the detection in the step S1, a disorder/disease developing in the body of the driver. The ECU 5 is capable of estimating that one of subarachnoid hemorrhage, myocardial infarction, hypoglycemia and epilepsy develops.

In step S4, the ECU 5 is operable to set a target time period. Specifically, the ECU 5 is operable to set, as the target time period, a time period corresponding to the disorder/disease estimated in the step S3, based on the table shown in FIG. 6.

Data of the table shown in FIG. 6 is preliminarily stored in the storage part 69 (see FIG. 1). In FIG. 6, values of the target time periods T1, T2, T3 are different from each other, wherein each of the values corresponds to the degree of urgency of a corresponding disorder/disease. For example, with respect to a disorder/disease having a relatively high urgency and thus requiring possibly prompt rescue, a relatively short time period is set as the target time period. On the other hand, with respect to a disorder/disease having a relatively low urgency, a relatively long time period is set as the target time period.

In step S5, the ECU 5 operates to detect a stop point candidate. Specifically, the ECU 5 operates to acquire map information, based on a signal received from the navigation device 33, and detect a plurality of points each of which exists within 5 km from the vehicle 2 in the traveling direction of the vehicle 2, and satisfies a given condition, as a plurality of stop point candidates. The given condition may be set based on various factors such as properties of the vehicle 2, properties of the road on which the vehicle 2 is traveling, the body condition of the driver detected in the step S1.

In step S6, the ECU5 operates to estimate a time period required to reach each of the stop point candidates. Specifically, the ECU 5 operates to first search, based on a given algorithm, a course to each of the stop point candidates detected in the step S5, and determine a vehicle speed pattern of the vehicle 2 when the vehicle 2 travels along the course. Further, the ECU 5 operates to estimate a time period required to reach each of the stop point candidates, based on a corresponding set of the determined course and vehicle speed pattern.

In step S7, the ECU 5 operates to narrow down the stop point candidates. Specifically, in a case where N stop point candidates (where N is an integer of two or more) are detected in the step S5, the ECU 5 operates, in the step S7, to select and leave less-than-N stop point candidates each satisfying the given condition, among the N stop point candidates, and exclude the remaining one or more stop point candidates. More specifically, the ECU 5 operates to select and leave, among the plurality of stop point candidates detected in the step S5, one or more stop point candidates each satisfying a condition that the required time period estimated with respect thereto in the step S6 is equal to or less than the target time period set in the step S4.

In step S8, the ECU 5 operates to estimate a rear-end collision risk at each of the stop point candidates. Specifically, the ECU 5 operates to estimate a risk that, when assuming that the vehicle 2 stops at each of the stop point candidates narrowed down in the step S7, the vehicle 2 will be rear-ended by a following vehicle.

Here, the estimation of the rear-end collision risk will be described in detail. The rear-end collision risk is calculated based on a "visibility risk" and a "relative speed risk", as expressed by the following formula f1.

$$(\text{Rear-End Collision Risk}) = (\text{Visibility Risk}) \;*\; (\text{Relative Speed Risk}) \;\text{---}\; (f1)$$

The "visibility risk" means a risk factor which increases along with an increase in difficulty in visually recognizing the vehicle 2 which stops, from a following vehicle. For example, the "visibility risk" is expressed by the graph in FIG. 7.

A "following vehicle visible distance" described in FIG. 7 means the maximum value of a distance from a following vehicle to the vehicle 2 in a state in which the vehicle 2 which stops is visible from the following vehicle. The "following vehicle visible distance" varies depending on a point where the vehicle 2 stops. For example, in a situation where the vehicle 2 stops on a curved or undulating road, or in a situation where there are obstacles such as walls or roadside trees around a road, the "following vehicle visible distance" with respect to a point where the vehicle stops is relatively small. On the other hand, in a situation where the vehicle 2 stops on a straight or flat road, or in a situation where there are few obstacles around a road, the "following vehicle visible distance" with respect to a point where the vehicle 2 stops is relatively large.

Along with a decrease in the "following vehicle visible distance", it becomes more difficult for a following vehicle to be braked so as to avoid a rear-end collision, so that the "visibility risk" becomes higher. The navigation device 33 stores therein map information, as mentioned above, and the visibility risk at each point of roads contained in the map information is preliminarily estimated and stored in the storage part 69 (see FIG. 1).

The "relative speed risk" means a risk factor which increases as a following vehicle is approaching the vehicle 2 at a higher vehicle speed. For example, the "relative speed risk" is expressed by the graph in FIG. 8. Along with an increase in relative speed of the following vehicle with respect to the vehicle 2 which stops, the "relative speed risk" becomes higher. The relationship between the relative speed and the "relative speed risk" is set based on a phenomenon that, as the relative speed becomes larger, it becomes more difficult for the following vehicle to be braked so as to avoid a rear-end collision, and therefore a risk that the following vehicle rear-ends the vehicle 2 becomes higher.

The ECU 5 operates to calculate the relative speed of the following vehicle with respect to the vehicle 2 which stops (vehicle speed: 0 km/h), on the assumption that the following vehicle is traveling at an upper speed limit assigned to each of the stop point candidates in accordance with law or regulation. That is, in a case where the upper speed limit assigned to the stop point candidate in accordance with law or regulation is 100 km/h, the relative speed is also 100 km/h. Data of the graphs shown in FIG.7 and FIG. 8 is preliminarily stored in the storage part 69 (see FIG. 1).

The ECU 5 operates to read, from the storage part 69, the "visibility risk" at each of the stop point candidates narrowed down in the step S7, and the "relative speed risk" corresponding to the relative speed at each of the stop point candidates. Then, the ECU 5 operates to calculate the rear-end collision risk by assigning the read "visibility risk" and "relative speed risk" to the formula f1. As can be understood from the relationships shown in FIGS. 7 and 8, the rear-end collision risk becomes higher as the following vehicle visible distance with respect to each of the stop point candidates becomes smaller. Further, the rear-end collision risk becomes higher as the relative speed of the following vehicle with respect to the vehicle 2 at each of the stop point candidates becomes larger.

The ECU 5 may be configured to estimate the rear-end collision risk based on a detailed location of each of the stop point candidates, in addition to or in place of the estimation of the rear-end collision risk based on the formula f1. The estimation of the rear-end collision risk based on the detailed location of each of the stop point candidates will be described below.

A risk that the vehicle 2 is rear-ended by a following vehicle largely varies, depending on at which of the three stop points SP as shown in FIGS. 2 to 4 the vehicle 2 stops. A probability that the vehicle 2 is rear-ended by a following vehicle when the vehicle 2 stops at the stop point SP set in the road shoulder 83 as in the second pattern (see FIG. 3) is empirically clearly lower than a probability that the vehicle 2 is rear-ended by a following vehicle when the vehicle 2 stops at the stop point SP set simply within the road 8 as in the first pattern (see FIG. 2). Further, generally, a vehicle speed of a vehicle traveling in the overtaking lane 81 is greater than that a vehicle traveling in the cruising lane 82. Therefore, even within the road 8, a probability that the vehicle 2 is rear-ended by a following vehicle when the vehicle 2 stops in the overtaking lane 81 is also empirically clearly higher than a probability that the vehicle 2 is rear-ended by a following vehicle when the vehicle 2 stops in the cruising lane 82. Furthermore, a probability that the vehicle 2 is rear-ended by a following vehicle when the vehicle 2 stops at the stop point SP set in the emergency parking bay 84 as in the third pattern (see FIG. 4) is empirically clearly lower than a probability that the vehicle 2 is rear-ended by a following vehicle when the vehicle 2 stops in the road shoulder 83.

Therefore, in the estimation of the rear-end collision risk based on the detailed location of each of the stop point candidates, values of the rear-end collision risk each corresponding to a respective one of the road, the road shoulder and the emergency parking bay are preliminarily stored in the storage part 69. The value of the rear-end collision risk at the road shoulder is smaller than the value of the rear-end collision risk at the road. Further, the value of the rear-end collision risk at the emergency parking bay is smaller than the value of the rear-end collision risk at the road shoulder. In the step S8, the ECU 5 operates to read, from the storage part 69, one or more of the values of the rear-end collision risk at the road, the road shoulder and the emergency parking bay, corresponding to the one or more stop point candidates narrowed down in the step S7.

In step S9, the ECU 5 operates to set a stop point. Specifically, the ECU 5 operates to set, among the stop point candidates narrowed down in the step S7, one stop point candidate which is smallest in terms of the rear-end collision risk estimated in the step S8, as a stop point.

In step S10, the ECU 5 operates to control traveling of the vehicle 2 to the stop point and stop of the vehicle 2 at the stop point. Specifically, the ECU 5 operates to transmit control signals, respectively, to the engine 41, the brake 42 and the electric power steering 43 (see FIG. 1) so as to controllably cause the vehicle 2 to travel to the stop point and stop at the stop point. During this process, the manipulation of the accelerator pedal by the driver is invalidated. On the other hand, the manipulation of the brake pedal by the driver is validated. This is because, even when the driver is becoming unconscious, he/she is likely to attempt to stop the vehicle 2 so as to avoid collision with an obstacle. Here, the vehicle 2 may be configured such that a system for stabilizing the behavior of the vehicle 2, such as an anti-lock braking system or an antiskid brake system, is activated during traveling of the vehicle 2.

[Functions/Effects of Embodiment]

In the system 1 according to the above embodiment, the target time period is set based on the physical abnormality of the driver detected by the abnormality detection part 51. Thus, by setting a relatively short target time period with respect to a physical abnormality having a relatively high urgency, it becomes possible to quickly stop the vehicle 2 to start a rescue operation. On the other hand, by setting a relatively long target time period with respect to a physical abnormality having a relatively low urgency, it becomes possible to set the stop point from among a larger number of stop point candidates.

The system 1 according to the above embodiment is equipped with the storage part 69 which preliminarily stores therein a plurality of values of the target time period each corresponding to a respective one of a plurality of physical abnormalities, wherein the target time period setting part 53 is operable to read, from the storage part 68, one of the stored values of the target time period which corresponds to the abnormality detected by the abnormality detection part 51.

According to this feature, it is possible to suppress a situation where, due to disturbance or the like, the target time period setting part 53 undesirably operates to set the target time period to an inappropriately-short or-long value. This makes it possible to set, as the target time period, a sufficient time period required for the physical abnormality of the driver.

In the above embodiment, the vehicle control part 68 is operable, when the abnormality detection part 51 detects the abnormality, to control the vehicle 2 to travel at a vehicle speed which is lower than 50 km/h,

According to this feature, it is possible to suppress an inertia force acting on the driver during stop of the vehicle 2. This makes it possible to allow the driver in an emergency condition to wait for rescue without a large postural imbalance.

As above, the present invention has been described based on one specific embodiment. However, it should be understood that the present invention is not limited to the specific embodiment. That is, various changes and modifications will be apparent to a person of ordinary skill in the art. Therefore, unless otherwise such changes and modifications depart from the scope of the present invention hereinafter defined by the claims, they should be construed as being included therein.

In the above embodiment, the abnormality detection part 51 of the ECU 5 is configured to detect the physical abnormality of the driver based on image data acquired by the vehicle interior camera 32. However, the present invention is not limited to this configuration. For example, in a case where the vehicle stop support system according to the present invention is equipped in a vehicle provided with an infrared sensor for detecting a body temperature or a pulse wave of a driver, a seat sensor for detecting a center-of-gravity position or a pulse wave depending on the posture of the driver, or the like, the abnormality detection part in the present invention may be configured to detect the physical abnormality of the driver based on detection information from such a sensor.

In the above embodiment, the required time period estimation part 57 of the ECU 5 is configured to search a course to each of the stop point candidates and determine a vehicle speed pattern of the vehicle 2 when the vehicle 2 travels along the course. However, the present invention is not limited to this configuration. For example, the required time period estimation part in the present invention may be configured to instruct the navigation device to perform search of the course and determination of the speed pattern, and, based on information provided from the navigation device, estimate the required time period.

LIST OF REFERENCE SIGNS

1: vehicle stop support system (system)
2: vehicle
51: abnormality detection part
53: target time period setting part
55: candidate detection part
57: required time period estimation part
67: stop point setting part
68: vehicle control part
69: storage part
SP: stop point

**Claims**

1. A vehicle stop support system (1) for supporting stop of a vehicle (2) which is traveling, comprising:

an abnormality detection part (51) for detecting a physical abnormality of a driver;
a candidate detection part (55) for detecting a plurality of stop point candidates which exist in a traveling direction of the vehicle (2);
a stop point setting part (67) for setting a stop point (SP), and
a vehicle control part (68) for controlling the vehicle (2) to travel to the stop point (SP) and stop at the stop point (SP),
**characterized in that**,
the vehicle stop support system (1) furthermore comprises:

a target time period setting part (53)
for setting a target time period based on the abnormality detected by the abnormality detection part (51) and
a required time period estimation part (57) for estimating a time period required to reach each of the stop point candidates,
wherein the stop point setting part (67) is operable to set the stop point (SP) from one or more of the plurality of stop point candidates each satisfying a condition that the required time estimated with respect thereto is equal to or less than the target time period.

2. The vehicle stop support system (1) according to claim 1, which further comprises a storage part (69) preliminarily storing therein a plurality of values of the target time period each corresponding to a respective one of a plurality of physical abnormalities, wherein the target time period setting part (53) is operable to read, from the storage part (69), one of the stored values of the target time period which corresponds to the abnormality detected by the abnormality detection part (51).

3. The vehicle stop support system (1) according to claim 1 or 2, wherein the vehicle control part (68) is operable, when the abnormality detection part (51) detects the abnormality, to control the vehicle (2) to travel at a vehicle speed which is lower than a predetermined value.

**Patentansprüche**

1. Fahrzeugstoppunterstützungssystem (1) zum Unterstützen des Stoppens eines sich fortbewegenden Fahrzeugs (2), aufweisend:

ein Anomaliedetektionsteil (51) zum Detektieren einer physischen Anomalie eines Fahrers;
ein Kandidatendetektionsteil (55) zum Detektieren einer Vielzahl von Stopppunktkandidaten, die in einer Fahrtrichtung des Fahrzeugs (2) vorhanden sind;
ein Stopppunkteinstellungsteil (67) zum Einstellen eines Stopppunkts (SP) und
ein Fahrzeugsteuerungsteil (68) zum Steuern des Fahrzeugs (2), so dass es bis zu dem Stopppunkt (SP) fährt und an dem Stopppunkt (SP) stoppt,
**dadurch gekennzeichnet, dass**
das Fahrzeugstoppunterstützungssystem (1) ferner aufweist:

ein Zielzeitraumeinstellungsteil (53) zum Einstellen eines Zielzeitraums auf Basis der durch das Anomaliedetektionsteil (51) detektierten Anomalie und

ein Teil zum Schätzen eines benötigten Zeitraums (57) zum Schätzen eines Zeitraums, der zum Erreichen von jedem der Stopppunktkandidaten erforderlich ist,

wobei das Stopppunkteinstellungsteil (67) dahingehend betreibbar ist, den Stopppunkt (SP) aus einem oder mehr der Vielzahl von Stopppunktkandidaten einzustellen, die jeweils eine Bedingung dahingehend erfüllen, dass die erforderliche Zeit, die in Bezug darauf geschätzt wurde, kleiner gleich dem Zielzeitraum ist.

2. Fahrzeugstoppunterstützungssystem (1) nach Anspruch 1, das ferner ein Speicherteil (69) aufweist, das darin eine Vielzahl von Werten der Zielzeitraums vorläufig speichert, die jeweils einer jeweiligen aus einer Vielzahl physikalischer Anomalien entsprechen, wobei das Zielzeitraumeinstellungsteil (53) zum Auslesen von einem der gespeicherten Werte des Zielzeitraums aus dem Speicherteil (69) betreibbar ist, welcher der durch das Anomaliedetektionsteil (51) detektierten Anomalie entspricht.

3. Fahrzeugstoppunterstützungssystem (1) nach Anspruch 1 oder 2, wobei das Fahrzeugsteuerungsteil (68) dahingehend betreibbar ist, das Fahrzeug (2) dahingehend zu steuern, sich mit einer Fahrzeuggeschwindigkeit fortzubewegen, die niedriger als ein vorgegebener Wert ist, wenn das Anomaliedetektionsteil (51) die Anomalie detektiert.

**Revendications**

1. Système d'aide à l'arrêt de véhicule (1) pour aider à l'arrêt d'un véhicule (2) qui se déplace, comprenant :

une partie de détection d'anomalie (51) pour détecter une anomalie physique d'un conducteur ;
une partie de détection de candidats (55) pour détecter une pluralité de candidats de points d'arrêt qui existent dans un sens de déplacement du véhicule (2) ;
une partie de définition de point d'arrêt (67) pour définir un point d'arrêt (SP), et
une partie de commande de véhicule (68) pour commander le véhicule (2) pour qu'il se déplace jusqu'au point d'arrêt (SP) et qu'il s'arrête au point d'arrêt (SP),
**caractérisé en ce que**
le système d'aide à l'arrêt de véhicule (1) comprend en outre :

une partie de définition de période de temps cible (53) pour définir une période de temps cible sur la base de l'anomalie détectée par la partie de détection d'anomalie (51) et
une partie d'estimation de période de temps nécessaire (57) pour estimer une période de temps nécessaire pour atteindre chacun des candidats de points d'arrêt,
dans lequel la partie de définition de point d'arrêt (67) peut être utilisée pour définir le point d'arrêt (SP) à partir d'un ou plusieurs candidats de point d'arrêt de la pluralité de candidats de point d'arrêt, chacun satisfaisant à une condition selon laquelle le temps nécessaire estimé par rapport à celui-ci ou ceux-ci est égal ou inférieur à la période de temps cible.

2. Système d'aide à l'arrêt de véhicule (1) selon la revendication 1, qui comprend en outre une partie de stockage (69) stockant de manière préliminaire dans celle-ci une pluralité de valeurs de la période de temps cible, chacune correspondant à une anomalie respective d'une pluralité d'anomalies physiques, dans lequel la partie de définition de période de temps cible (53) peut être utilisée pour lire, à partir de la partie de stockage (69), une des valeurs stockées de la période de temps cible qui correspond à l'anomalie détectée par la partie de détection d'anomalie (51).

3. Système d'aide à l'arrêt de véhicule (1) selon la revendication 1 ou 2, dans lequel la partie de commande de véhicule (68) peut être utilisée, lorsque la partie de détection d'anomalie (51) détecte l'anomalie, pour commander le véhicule (2) pour qu'il se déplace à une vitesse de véhicule qui est inférieure à une valeur prédéterminée.

# FIG.1

# FIG.2

# FIG.3

FIG.4

# FIG.5

START

Detecting body condition of driver — S1

S2

NO — Is there abnormality?

YES

Estimating disorder/disease — S3

Setting target time period — S4

Detecting stop point candidates — S5

Estimating required time period — S6

Narrowing down stop point candidates — S7

Estimating rear-end collision risk — S8

Setting stop point — S9

Controlling vehicle to travel to stop point and stop at stop point — S10

END

# FIG.6

| Disorder/Disease | Target Time Period |
|---|---|
| Subarachnoid Hemorrhage Myocardial Infarction | T1 |
| Hypoglycemia | T2 |
| Epilepsy | T3 |

# FIG.7

# FIG.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102013016436 A1
- JP 2017001519 A
- JP 2017190048 A